# EUROPEAN PATENT SPECIFICATION

(11) **EP 2 762 766 B1**
(45) Date of publication and mention of the grant of the patent: **15.02.2017**
(21) Application number: 12837745.4
(22) Date of filing: 09.08.2012
(51) Int. Cl.: F21S 8/00, F21V 17/12, F21V 31/00, F21V 29/67, F21V 23/00, F21Y 101/00, F21W 131/103, F21V 29/74, F21V 5/00, F21V 5/04, F21V 17/10, F21Y 105/00, F21V 19/00, F21W 111/02, F21Y 105/10, F21Y 115/10

(54) **LED PHOTO-ELECTRIC SOURCE ASSEMBLY AND LED ROAD LAMP IMPROVED FROM TRADITIONAL ROAD LAMP**
FOTOELEKTRISCHE LED-QUELLENANORDNUNG UND LED-STRASSENLAMPE MIT VERBESSERTEN EIGENSCHAFTEN IM VERGLEICH ZU EINER TRADITIONELLEN STRASSENLAMPE
ENSEMBLE SOURCE PHOTOÉLECTRIQUE À DIODES ÉLECTROLUMINESCENTES ET LAMPE ROUTIÈRE À DIODES ÉLECTROLUMINESCENTES AMÉLIORÉE PAR RAPPORT À UNE LAMPE ROUTIÈRE CLASSIQUE

(30) Priority: 02.10.2011 CN 201110303619; 13.12.2011 CN 201110416430
(43) Date of publication of application: 06.08.2014
(73) Proprietor: Nanker (Guang Zhou) Semiconductor Manufacturing Corp., Guangzhou, Guangdong 510663 (CN)
(72) Inventor: WU, Chun-wei, Guangzhou Guangdong 510663 (CN)
(74) Representative: Kramer Barske Schmidtchen Patentanwälte PartG mbB
(86) International application number: PCT/CN2012/079863
(87) International publication number: WO 2013/049982

(56) References cited:
- WO-A1-2009/026736
- CN-A- 101 498 412
- CN-A- 101 551 073
- CN-A- 102 155 699
- CN-A- 102 155 699
- CN-A- 102 352 975
- CN-A- 102 434 799
- CN-A- 102 434 822
- CN-U- 201 593 707
- CN-U- 201 731 402
- CN-U- 202 228 980
- CN-U- 202 253 204
- CN-U- 202 392 516
- CN-Y- 2 926 777

## Description

### FIELD OF THE INVENTION

The present invention relates to an LED photo-electric source assembly. Also, the present invention relates to a road lamp, further to an LED road lamp improved from traditional road lamp.

### BACKGROUND OF THE INVENTION

At present, the road lamp is a familiar lamp. The traditional road lamp is usually made by halogen lamp like sodium lamp which it is high power consumption, short service life and with low light efficiency. As drawing 1 shown, it is a structure diagram of a traditional road lamp with back uncover. The lamp holder comprises a housing assembly 100, a reflector 200, a sodium light source 300, a sodium light electric source 400, and a glass protection diffuser 500. LED are applied more and more widely like LED road lamp by their advantages of high light efficiency, long service life and low power consumption. Considering with heat dissipation, their radiators are exposed, also it is so small due to LED 's own small volume, so based on above reason, current road lamps' shape are strangely and monotonous. It is very different from the traditional road lamp and also much ugly than that.

Also for the district which used traditional road lamp, it need to disassemble entirely if use current LED road lamp to replaced, it can not use original traditional road lamps' holder any more but need to use a new LED road lamp holder. So this will be caused repeat invest and waste. And if the improved LED road lamp was broken, it need to use a new LED road lamp holder to replace and then disassemble and take back to check. It will be very trouble to maintain with low efficiency and high cost.

Also, the applicant has used above mentioned method to develope high power LED road lamp, but the radiating air can not directly outflow to outside. Even if the air is circularly and convective, it also needs to heat change through outer casing and outer air, this will be caused high temperature on outer casing as well as inner casing, and heat can not dissipating.

When LED is applied for daily lighting and achieve lighting requirement, it need to centralize multi-power LED to one lamp, so LED's heat dissipation is a most important element to affect LED lamp use condition and service life, especially for a high power LED lamp, the heat dissipation is become a technological difficult for them to widely apply.

Traditional LED lamp is belong to passive heat dissipation, which it means use radiators or similar device for cooling, so when it need to improve heat dissipation effect, it need to increase heat dissipation area as more as possible, but this will cause current LED lamp shape bigger and structure complicated, also heat dissipation effect is unsatisfied. The applicant combined radiating fan to radiator and developed LED lamp with initiative heat dissipation and passive heat dissipation and effect is excellent as it can be improve stabilization and service life. But for improving heat dissipation effect on high power road lamp, it always made by openly structure with badly waterproof and dustproof, so it will be restricted by outside and especial condition. And also it need to design much complicated ventilation structure for increase heat dissipation channel.

Currently, it's use thermally conductive silicone and thermally conductive empire cloth to heat conduct and insulate between light source board and radiator, the heat conductivity coefficient for thermally conductive silicone is 3W/ (m·K) ∼4W/ (m·K), the heat conductivity coefficient for thermally conductive empire cloth is 2W/ (m·K) ∼3W/(m·K), both effects are unsatisfying due to low heat conductivity coefficient. Also, thermally conductive silicone is a unstable paste so it is difficult to spread evenly between light source board and radiator, so this will cause badly thermal conductivity and reduce insulating property, further will cause short circuit; thermally conductive empire cloth is easy to transform, also troublesomely stall and low efficient.

CN102155699 (A) discloses an LED lamp comprising an LED light source component, a driving circuit board component, a heat dissipater, a heat dissipation fan, a power line, a wind guide shade, an upper power box cover, a lower power box cover and a top cover, wherein the upper power box cover and the lower power box cover are sealed together so as to wrap and cover the driving circuit board component; the heat dissipation fan, the upper power box cover, the lower power box cover and the heat dissipater are wrapped and covered into a cavity body by the wind guide shade; an air guide hole is formed on the upper side wall of the wind guide shade; the air guide hole is wrapped and covered by the top cover on the side face; the air guide hole is communicated with the outside through an opening at the bottom of the top cover; the power line and the punchthrough part of the upper power box cover are sealed together through a waterproof bolt component; the power line and the punchthrough part of the lower power box cover are sealed together through waterproof sealing glue; and the heat dissipation fan is a waterproof fan.

### SUMMARY OF THE INVENTION

The present invention intends to overcome deficiencies of the prior art and provide an LED photo-electric source assembly, which is simple in structure and best effect in heat dissipation.

Further, the present invention also provides an LED road lamp with low cost, same shape as traditional road lamps, easy disassembly which it improved from traditional road lamp. This kind of road lamp can be improve and maintain on field.

The technical solution adopted in the present invention of the LED photo-electric source assembly is:

An LED photo-electric source assembly, comprises a radiator, a radiating fan, a driving circuit board subassembly, an LED light source component, an upper cover of a power supply box, a lower cover of the power supply box, and a waterproof bolt component, wherein the LED light source component comprises several LED chips and LED submount; the radiator comprises a bottom plate that the undersuface is flat, on the top face of which a radiating part being flaky or cylindrical is provided; the LED submount is fixedly connected to the bottom plate transmitting heat; in the central area of the upper part of radiating part, a space area is provided for containing the radiating fan i.e. dust-proof and water-proof fan; in the air intake and air outlet of the radiating fan two fan guards are provided; on the top of the radiating fan the lower cover is fixedly connected to radiator; the upper cover and the lower cover are sealed joint and the driving circuit board subassembly is inside; the waterproof bolt component connects the port which a power wire going through the upper cover.

Further, a thermal insulation synthetic mica sheet is between the LED submount and the bottom plate, the edge of which is beyond 1 ∼ 10mm to the edge of the LED submount; the LED submount and the bottom plate are fixed through several first bolts, an insulating colloidal particle fixed to the first bolts is electrical isolation between the LED submount with the bottom plate and first bolts; the LED photo-electric source assembly further comprising an annular insulator board, which is in the sealed space by the upper cover and the lower cover, inside of which the driving circuit board subassembly is provided.

Further, several third bolts are fixedly connected to radiator orderly going through the upward fan guard of the radiating fan, the radiating fan and the downward fan guard of which; the upper cover and the lower cover are fixedly connected by the fourth bolts and several nuts; at least two shores protruding out of the radiator part on the back of the radiator are provided, and the shores supportting the lower cover are higher 10∼50mm than the top surface of the radiating fan; several double-screw bolts with internal thread on head and external thread on tail are fixedly connected to the shores going through the lower cover; several fifth bolts are fixedly connected with the internal thread of the double-screw bolts going through the driving circuit board subassembly; the height of the head of the double-screw bolts which the internal thread inside is 5∼10mm; the outline of the radiator is circular, and the upper cover and the lower cover are also circular.

Further, it comprises a lens, a decorate circle; wherein the lens and the decorate circle are fixedly connected to the bottom of the radiator; a silicone waterproof gasket is in the connector of the lens with the bottom of the radiator, that is fixedly connected to the second bolts; sevaral installing holes surrounding the decorate circle are provided.

Or, it comprises a wind scooper with flared shape; the wind scooper is fixedly connected to the radiator by several connecting bolts across the top edge of the wind scooper, which surrounding the side of the radiating part; an annular air outlet between bottom of the wind scooper with bottom of the radiator is provided; the outside air flow into the radiating fan from the space between the lower cover with the radiator, and flow outside through the annular air outlet after through the channel inside of the radiating part.

Further, it comprises comprising a lens, which is fixedly connected to bottom of the radiator by the second bolts and the silicone waterproof gasket; Sevaral installing holes are in the around of the wind scooper.

The technical solution adopted in the present invention of the LED road lamp improved from traditional road lamp is:

An LED road lamp improved from traditional road lamp, comprises an LED photo-electric source assembly, an installing board, and a housing assembly of a traditional road lamp for containing light source, wherein a light outlet arranged on the installing board adapts in size and shape to an opening arranged at the bottom of the housing assembly; the LED photo-electric source assembly is fixedly connected to the installing board and emits light through the light outlet and the installing board is fixedly connected with the housing assembly through a clamping fixture; the LED photo-electric source assembly comprises a radiator, a radiating fan, a driving circuit board subassembly, an LED light source component, an upper cover of a power supply box, a lower cover of the power supply box, and a waterproof bolt component, wherein the LED light source component comprises several LED chips and LED submount; the radiator comprises a bottom plate that the undersuface is flat, on the top face of which a radiating part being flaky or cylindrical is provided; the LED submount is fixedly connected to the bottom plate transmitting heat; in the central area of the upper part of radiating part, a space area is provided for containing the radiating fan i.e. dust-proof and water-proof fan; in the air intake and air outlet of the radiating fan two fan guards are provided; on the top of the radiating fan the lower cover is fixedly connected to radiator; the upper cover and the lower cover are sealed joint and the driving circuit board subassembly is inside; the waterproof bolt component connects the port which a power wire going through the upper cover.

Further, several installing holes is on the installing board arround the light outlet; an install bolts is fixedly connected to the installing board by going through the installing holes by a nut, afterwards the installing hole of the LED photo-electric source assembly is sleeved to the install bolt, and another nut or a snap joint is fixedly connected to install bolts, the LED photo-electric source assembly is fixedly connected to the installing board.

Further, several ventilation slots or ventilation holes in the installing board are provided.

Further, a install hole for fan is in the installing board, and an outer radiating fan is on the install hole.

Further, the clamping fixture comprises a roll forming plate and several fastening screws; several install column with thread is arranged around the opening at the bottom of the housing assembly, on which the edge of the installing board overlaping joint; a waterproof jacket is arranged around the edge of installing board, and the bottom of the roll forming plate is holding down the installing board, and the top of the roll forming plate is fixedly connected to the install column by the fastening screw, the installing board is fixedly connected to the housing assembly.

Further, a thermal insulation synthetic mica sheet is between the LED submount and the bottom plate, the edge of which is beyond 1∼10 mm to the edge of the LED submount; the LED submount and the bottom plate are fixed through several first bolts, an insulating colloidal particle fixed to the first bolts is electrical isolation between the LED submount with the bottom plate and first bolts; the LED photo-electric source assembly further comprising an annular insulator board, which is in the sealed space by the upper cover and the lower cover, inside of which the driving circuit board subassembly is provided.

Further, several third bolts are fixedly connected to radiator orderly going through the upward fan guard of the radiating fan, the radiating fan and the downward fan guard of which; the upper cover and the lower cover are fixedly connected by the fourth bolts and several nuts; at least two shores protruding out of the radiator part on the back of the radiator are provided, and the shores supportting the lower cover are higher 10∼50 mm than the top surface of the radiating fan; several double-screw bolts with internal thread on head and external thread on tail are fixedly connected to the shores going through the lower cover; several fifth bolts are fixedly connected with the internal thread of the double-screw bolts going through the driving circuit board subassembly; the height of the head of the double-screw bolts which the internal thread inside is 5∼10 mm; the outline of the radiator is circular, and the upper cover and the lower cover are also circular.

Further, the LED photo-electric source assembly comprises a lens, a decorate circle; wherein the lens and the decorate circle are fixedly connected to the bottom of the radiator; a silicone waterproof gasket is in the connector of the lens with the bottom of the radiator, that is fixedly connected to the second bolts; sevaral installing holes surrounding the decorate circle are provided.

Or, the LED photo-electric source assembly comprise a wind scooper with a flared shape; the wind scooper is fixedly connected to the radiator by several connecting bolts across the top edge of the wind scooper, which surrounding the side of the radiating part; an annular air outlet between bottom of the wind scooper with bottom of the radiator is provided; the outside air flow into the radiating fan from the space between the lower cover with the radiator, and flow outside through the annular air outlet after through the channel inside of the radiating part; the bottom of the wind scooper arragend outer edge, which holding down the installing board and fixedly connected by bolts, adapts in size to the gap on installing board; the air inside the housing assembly flow outside through the annular air outlet by the radiator fan.

Further, it comprises a lens, which is fixedly connected to bottom of the radiator by the second bolts and the silicone waterproof gasket; sevaral installing holes are in the around of the wind scooper.

The present invention has advantageous effects as below. According to the LED photo-electric source assembly that comprises a radiator, a radiating fan, a driving circuit board subassembly, an LED light source component, an upper cover of a power supply box, a lower cover of the power supply box, and a waterproof bolt component, wherein the LED light source component comprises several LED chips and LED submount; the radiator comprises a bottom plate that the undersuface is flat, on the top face of which a radiating part being flaky or cylindrical is provided; the LED submount is fixedly connected to the bottom plate transmitting heat; in the central area of the upper part of radiating part, a space area is provided for containing the radiating fan i.e. dust-proof and water-proof fan; in the air intake and air outlet of the radiating fan two fan guards are provided; on the top of the radiating fan the lower cover is fixedly connected to radiator; the upper cover and the lower cover are sealed joint and the driving circuit board subassembly is inside; the waterproof bolt component connects the port which a power wire going through the upper cover. The power wire can be sealed by the waterproof bolt component then achieve to waterproof and dustproof; also, the radiating fan part is waterproof and dustproof; so based on above this whole lamp has function of waterproof and dustproof, and it is very suitable for road lamp especially; also this LED lamp has initiative heat dissipation and passive heat dissipation after combined radiating fan to radiator, so it will be improve stabilization and service life. In a word, this invention of the LED photo-electric source assembly is simple structure, good heat dissipation, good waterproof and dust proof.

Further, this invention of the LED photo-electric source assembly which comprisw a wind scooper with a flared shape; the wind scooper is fixedly connected to the radiator by several connecting bolts across the top edge of the wind scooper, which surrounding the side of the radiating part; an annular air outlet between bottom of the wind scooper with bottom of the radiator is provided; the outside air flow into the radiating fan from the space between the lower cover with the radiator, and flow outside through the annular air outlet after through the channel inside of the radiating part. The air on radiating fan can be deflect by wind scooper and make it fully flow by top in and bottom out, this will be avoid blind area and turbulence, also avoid the abuse by cooling air can not disperse with high temperature on internal recycling. So it takes the cooling air flow to outside quickly and reduce lamp's working temperature. Also annular air outlet between the bottom of wind scooper and radiator can enhance more decoration, so this invention of the LED photo-electric source assembly has easy structure, low cost, good effect on heat dissipation, also optimize the channel for cooling air flow. Take this LED photo-electric source assembly apply to LED road lamp, it will be make inner and outer air on outer casing circularly, this will be avoid high temperature by inner circular on outer casing, so it no needs to install extra outer exhaust fan, and will not affect lamp's appearance, also improve product's stabilization, further, the annular air outlet between the bottom of wind scooper and radiator enhanced more decoration, so this invention of LED road lamp has easy structure, good heat dissipation, low inner working temperature, and no more extra cost.

This invention of the LED photo-electric source assembly wherein a thermal insulation synthetic mica is sheet between the LED submount and the bottom plate, the edge of which is beyond 1∼10 mm to the edge of the LED submount; the synthetic mica sheet was made by Mica mineral raw materials and then plus mucilage glue to press by high temperature, it has advantageous of excellent thermal conductivity, fire resistance and electrical insulating property, homogeneous thick, adjustable area / size, flexibility and processability. The heat conductivity coefficient for the synthetic mica sheet is 5W/ (m·K) ∼24W/ (m·K), it is higher than current used which thermally conductive silicone is 3W/ (m·K) ∼4W/ (m·K), and conductive empire cloth is 2W/ (m·K) ∼3W/ (m·K), both heat conductivity coefficient are low and bad heat dissipation effect. Also, thermally conductive silicone is a unstable paste so it is difficult to spread evenly between light source board and radiator, so this will cause badly thermal conductivity and reduce insulating property, further will cause short circuit; thermally conductive empire cloth is easy to transform, also troublesomely stall and low efficient. But mica sheet is a stable state with higher uniformity, so it will be make the touch of LED submount and bottom plate closely and uniformly, and better heat dissipation, insulating property, also easily install, high efficient; due to the edge of mica sheet is beyond 1∼ 10mm to the edge of LED submount, it can be meet the request of creepage's distance between LED submount and radiator to improve safety, So this invention of the LED photo-electric source assembly has easy structure, higher production efficiency, good hermal insulation.

This invention of the LED road lamp improved from traditional road lamp comprises an LED photo-electric source assembly, an installing board, and a housing assembly of a traditional road lamp for containing light source, wherein a light outlet arranged on the installing board adapts in size and shape to an opening arranged at the bottom of the housing assembly; the LED photo-electric source assembly is fixedly connected to the installing board and emits light through the light outlet and the installing board is fixedly connected with the housing assembly through a clamping fixture. This invention is using traditional road lamp's outer casing as LED road lamp's, and remove traditional reflector, sodium light source, sodium power source, glass protection diffuser, then took the LED photo-electric source assembly and installing board fix in the outer casing by traditional road lamp's holding fixed device, it fully remain traditional 's appearance so it is same. Also through this easily install method, not only easily disassembly and installation on locale, but also can use the LED photo electric source directly replace to broken one, this will be avoid a trouble to take wholly lamp holder back to factory to check, and high efficiency on improvement and maintain. Also it will be reduce much whole cost and avoid repeat invest and waste, so for this road lamp which it improved from traditional road lamp with low cost, also same appearance as traditional one, easily remove and high efficiency on installation.

### BRIEF DESCRIPTION OF DRAWINGS

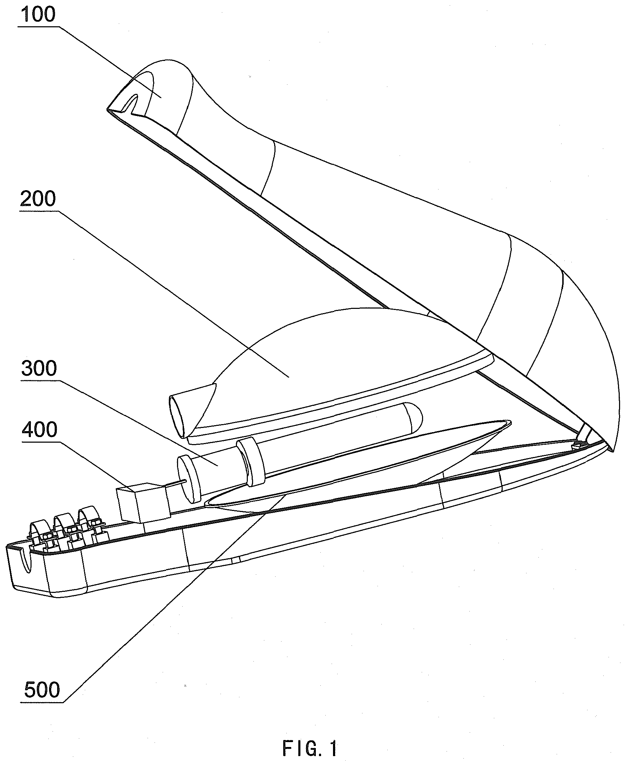

Fig. 1 is a structure diagram of a traditional road lamp;
Fig. 2 is a whole structure diagram of the LED road lamp as Embodiment I of the present invention;
Fig. 3 is a structure diagram of the LED road lamp's install board as Embodiment I of the present invention;
Fig. 4∼6 are the structure diagrams of the LED road lamp's install board as Embodiment II∼IV of the present invention;
Fig. 7 is a stereoscopic-section diagram of the LED photo-electric source assembly as Embodiment I of the present invention;

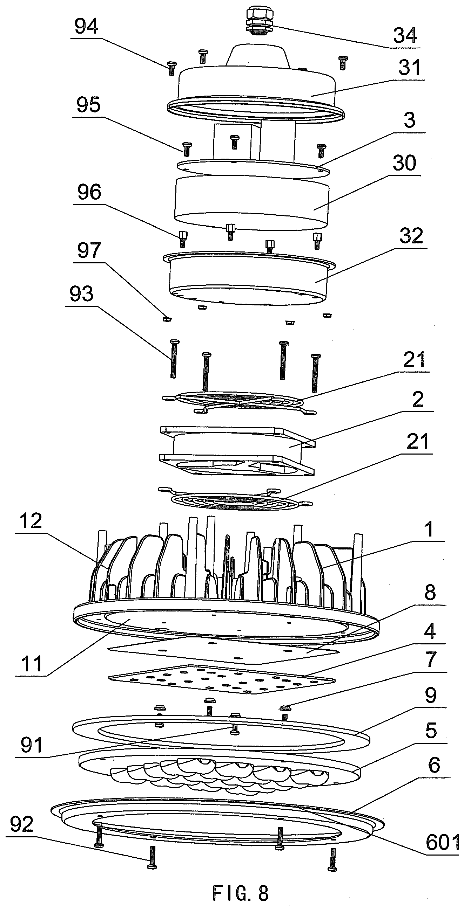

Fig. 8 is a disassembly diagram of the LED photo-electric source assembly as Embodiment I of the present invention;

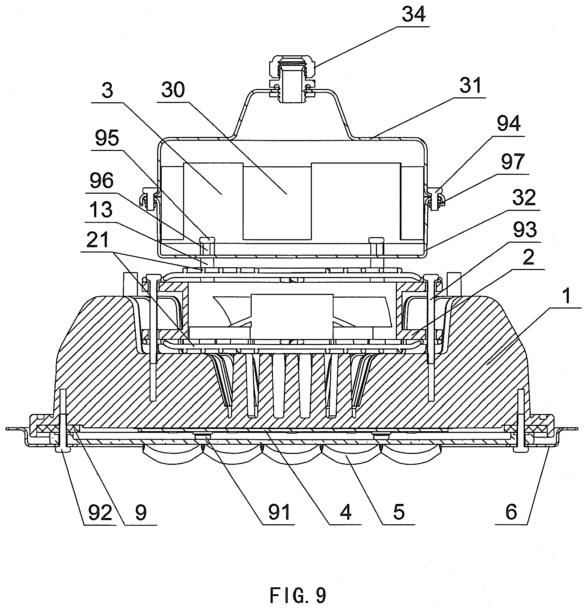

Fig. 9 is a cross-section diagram of the LED photo-electric source assembly as Embodiment I of the present invention;

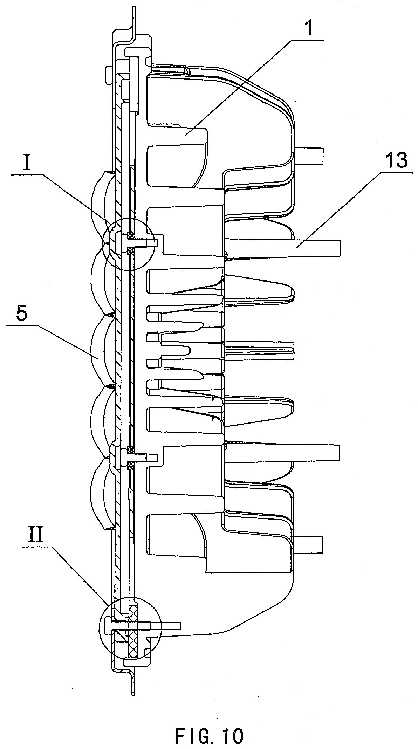

Fig. 10 is a cross-section diagram of the radiator and light source part of the LED photo-electric source assembly as Embodiment I of the present invention;

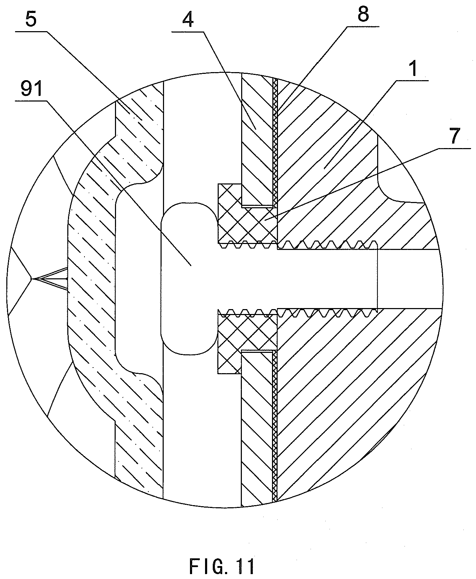

Fig. 11 is a part amplifying structure diagram of Fig.10 with remark I;

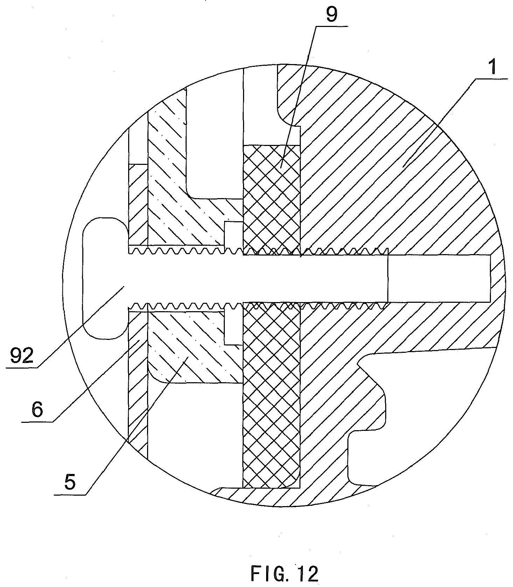

Fig. 12 is a part amplifying structure diagram of Fig.10 with remark II;
Fig. 13 is a connecting structure diagram of installing board with outer casing of Fig.2 with remak III;
Fig. 14 is a connecting structure diagram of installing board with LED photo-electric source assembly as Embodiment I of the present invention;
Fig. 15 is a connecting structure for installing board with LED photo-electric source assembly according to Embodiment II of the present invention;
Fig. 16 is a connecting structure diagram of snap joint with installing bolt of Fig. 15.

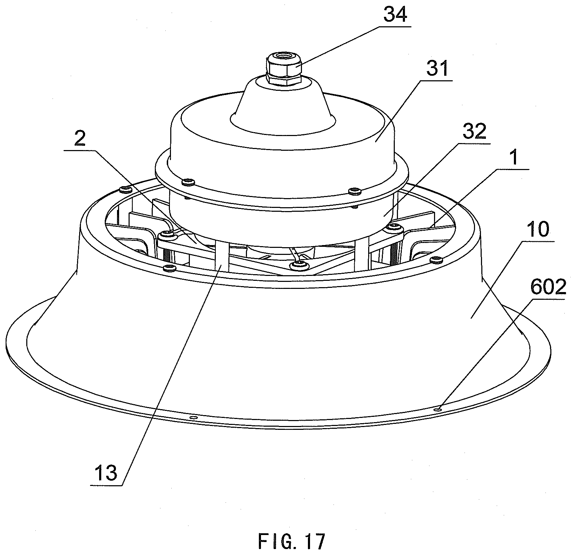

Fig. 17 is a stereoscopic-section diagram of the LED photo-electric source assembly as Embodiment II of the present invention;

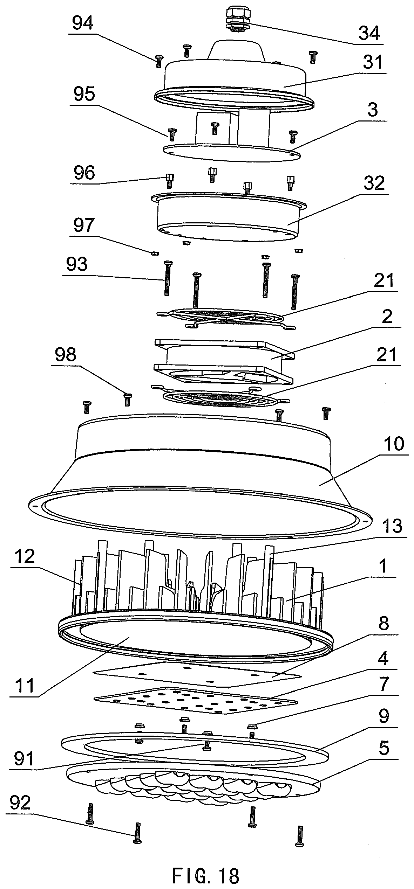

Fig. 18 is a disassembly diagram of the LED photo-electric source assembly as Embodiment II of the present invention;
Fig. 19 is a cross-section diagram of the LED photo-electric source assembly as Embodiment II of the present invention; and
Fig. 20 is a cross-section diagram of the LED road lamp as Embodiment II of the present invention.

### DETAILED DESCRIPTION OF THE INVENTION

### Embodiment I:

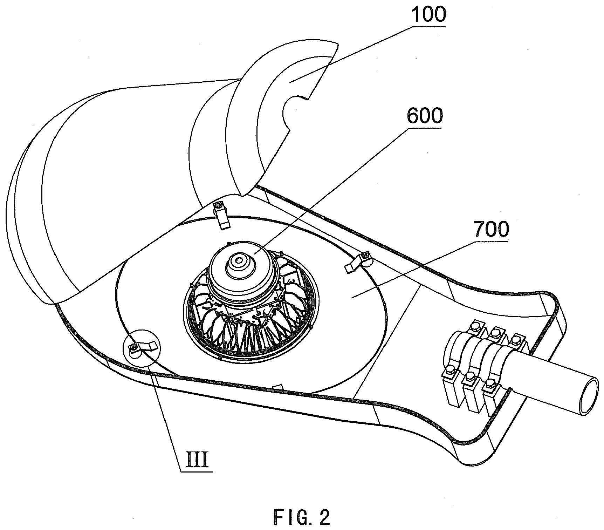

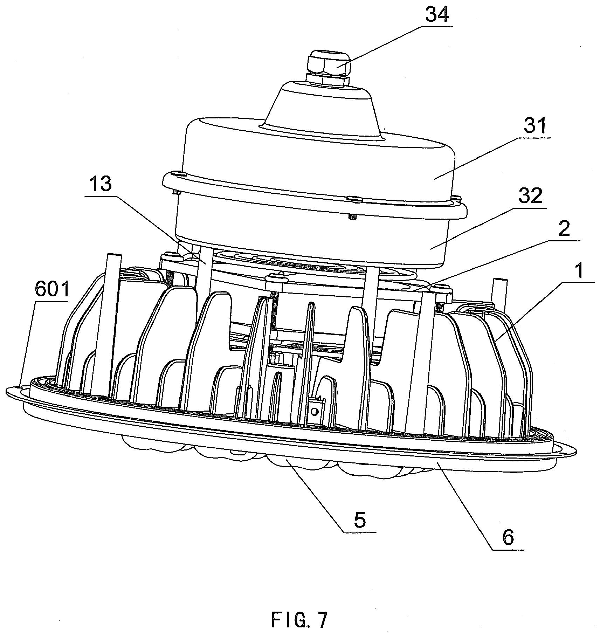

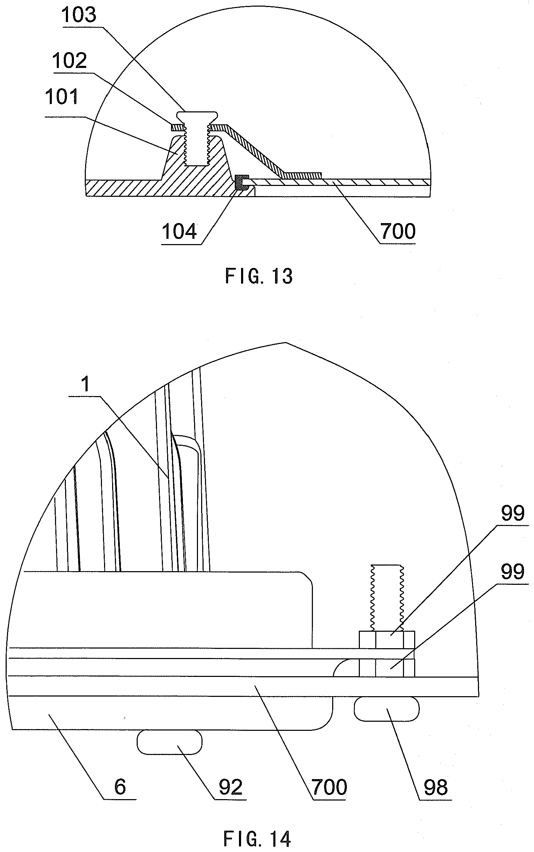

As shown in Fig. 2, Fig. 3, Fig. 7∼Fig. 14, the LED road lamp improved from traditional road lamp comprises an LED photo-electric source assembly 600, an installing board 700, and a housing assembly 100 of a traditional road lamp for containing light source, wherein a light outlet 701 arranged on the installing board 700 adapts in size and shape to an opening arranged at the bottom of the housing assembly 100; in this embodiment the installing board 700 is oval, and the light outlet 701 is circular; the LED photo-electric source assembly 600 is fixedly connected to the installing board 700 and emits light through the light outlet 701 and the installing board 700 is fixedly connected with the housing assembly 100 through a clamping fixture; the detailed connecting method as: four installing holes 702 is on the installing board 700 arround the light outlet 701; an install bolts 98 is fixedly connected to the installing board 700 by going through the installing holes 702 by a nut 99, afterwards the installing hole 601 of the LED photo-electric source assembly 600, which surrounding the decorate circle 6, is sleeved to the install bolt 98, and another nut 99 is fixedly connected to install bolts 98, the LED photo-electric source assembly 600 is fixedly connected to the installing board 700. The clamping fixture comprises a roll forming plate 102 and several fastening screws 103; four install column 101 with thread is arranged around the opening at the bottom of the housing assembly 100, on which the edge of the installing board 700 overlaping joint; a waterproof jacket 104 is arranged around the edge of installing board 700, and the bottom of the roll forming plate 102 is holding down the installing board 700, and the top of the roll forming plate 102 is fixedly connected to the install column 101 by the fastening screw 103, the installing board 700 is fixedly connected to the housing assembly 100.

The LED photo-electric source assembly 600 comprises a radiator 1, a radiating fan 2, a driving circuit board subassembly 3, an LED light source component 4, an annular insulator board 30, an upper cover 31 of a power supply box, a lower cover 32 of the power supply box, a lens 5, a decorate circle 6, a thermal insulation synthetic mica sheet8,and a waterproof bolt component 34, wherein the LED light source component 4 comprises several LED chips and LED submount; the outline of the radiator 1 is circular, the radiator 1 comprises a bottom plate 11 that the undersuface is flat, on the top face of which a radiating part 12 being flaky in the outer ring and cylindrical inside for increasing heat dissipation channel and inproving the cooling performance; in the central area of the upper part of radiating part 12, a space area is provided for containing the radiating fan 2 i.e. dust-proof and water-proof fan, so the radiating fan is dustproof and waterproof; in the air intake and air outlet of the radiating fan 2 two fan guards 21 are provided to prevent foreign matter enter into the fan and offer more security protection; the detailed connecting method as: four third bolts 93 are fixedly connected to radiator1 orderly going through the upward fan guard 21 of the radiating fan 2, the radiating fan 2 and the downward fan guard 21 of which; on the top of the radiating fan 2 the lower cover 32 is fixedly connected to radiator 1; the upper cover 31 and the lower cover 32 are sealed joint and the driving circuit board subassembly 3 is inside; the detailed connecting method as: the upper cover 31 and the lower cover 32 are fixedly connected by four fourth bolts 94 and four nuts 97; the annular insulator board 30 is in the sealed space by the upper cover 31 and the lower cover 32 to improve insulation and isolation between power source to the upper cover 31 and the lower cover 32, inside of which the driving circuit board subassembly 3 is provided; the waterproof bolt component 34 connects the port which a power wire going through the upper cover 31; the power wire (unremaked in the drawings) can be sealed by the waterproof bolt components 34, as it can be make power source waterproof and dustproof; four shores 13 protruding out of the radiator part on the back of the radiator 1 are provided, and the shores13 supportting the lower cover 32 are higher 10∼50mm than the top surface of the radiating fan 2; so this will be retain a space to strengthen ventilation for fan's intake and outlet, the detailed connecting method as: four double-screw bolts 96 with internal thread on head and external thread on tail are fixedly connected to the shores 13 going through the lower cover 32; four fifth bolts 95 are fixedly connected with the internal thread of the double-screw bolts 96 going through the driving circuit board subassembly 3; the hole on the driving circuit board subassembly 3 which the fifth bolts 95 goning through is taken to isolate the insulation; the height of the head of the double-screw bolts 96 which the internal thread inside is 5∼10mm; so it can be meet the request of creepage's distance and insulation between driving circuit board subassembly 3 and lower cover 32; the LED submount is fixedly connected to the bottom plate 11 transmitting heat; the detailed connecting method as: the LED submount and the bottom plate 11 are fixed through four first bolts 91, an insulating colloidal particle 7 fixed to the first bolts 91 is electrical isolation between the LED submount with the bottom plate 11 and first bolts 91; so this will strengthen insulation and further enhance creepage's distance to meet requirement of safety; the thermal insulation synthetic mica sheet 8 is between the LED submount and the bottom plate 11, the edge of which is beyond 1∼10mm to the edge of the LED submount; the lens 5 and the decorate circle 6 are fixedly connected to the bottom of the radiator 1, the detailed connecting method as: a silicone waterproof gasket 9 is in the connector of the lens 5 with the bottom of the radiator 1 to further enhance waterproof property for light source part, which is fixedly connected to the second bolts 92; sevaral installing holes 601 surrounding the decorate circle 6 are provided; the upper cover 31 and the lower cover 32 are also circular which is same as the outline of radiator 1, so it is good for reducing overall volum.

The power wire can be sealed by the waterproof bolt component 34 then achieve to waterproof and dustproof; also, the radiating fan 2 is waterproof and dustproof; also the decorate circle 6 and the lens 5 are fixed joint with the bottom of the radiator 1 to make light source part is waterproof and dustproof; so based on above this whole LED photo-electric source assembly 600 has function of waterproof and dustproof, and it is very suitable for the road lamp especially; also this LED lamp has initiative heat dissipation and passive heat dissipation after combined the radiating fan 2 to the radiator 1, so it will be improved stabilization and service life; a thermal insulation synthetic mica sheet 8 is between the LED submount and the bottom plate 11, the synthetic mica sheet 8 was made by Mica mineral raw materials and then plus mucilage glue to press by high temperature, it has advantageous of excellent thermal conductivity, fire resistance and electrical insulating property, homogeneous thick, adjustable area / size, flexibility and processability; the heat conductivity coefficient for the synthetic mica sheet is 5W/ (m·K) ∼24W/ (m·K), it is higher than thermally conductive silicone and conductive empire cloth; also the mica sheet is a stable state with higher uniformity, so it will be make the touch of LED submount and bottom plate closely and uniformly, and better heat dissipation, insulating property, also easily install, high efficient; due to the edge of mica sheet is beyond 1∼ 10mm to the edge of LED submount, it can be meet the request of creepage's distance between LED submount and radiator to improve safety; so this invention of the LED photo-electric source assembly is simple structure, higher production efficiency, good heat dissipation and hermal insulation, good waterproof and dustproof; when the LED photo-electric source assembly 600 is working, the radiating fan 2 is working at the same time, the thermic from LED chip brighting through LED submount and the mica sheet 8 to conduct to the radiator 1, the radiator 1 is same passive heat dissipation as current radiator, let one part of thermic flow to air, also, under the effect of the radiating fan 2, the outside air was forcible to flow through the radiator 1, take away thermic on radiator 1 to avoid LED chip working under higt temperature to extend service life; due to it is a forcible heat dissipation, so it can be reduce the weight and volume of radiator than normal lamp and enhance the adaptation.

### Embodiment II:

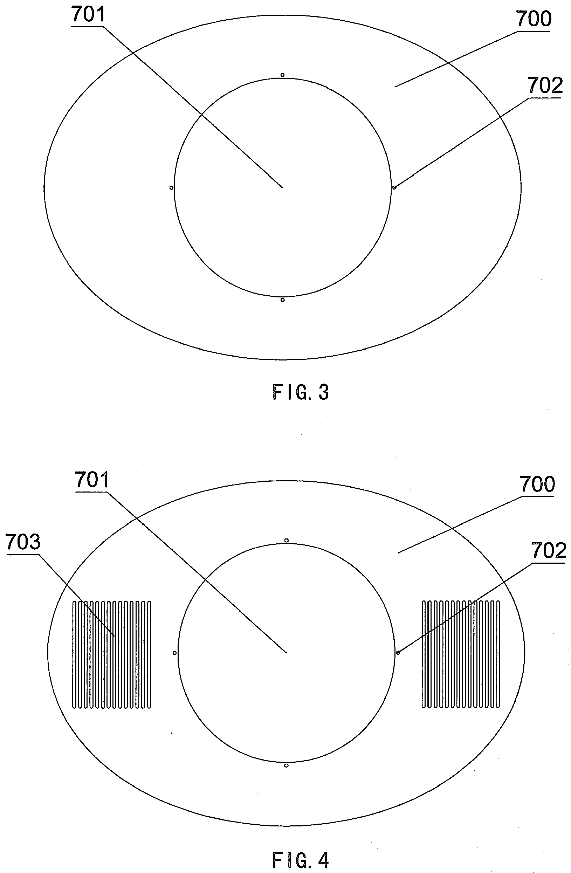

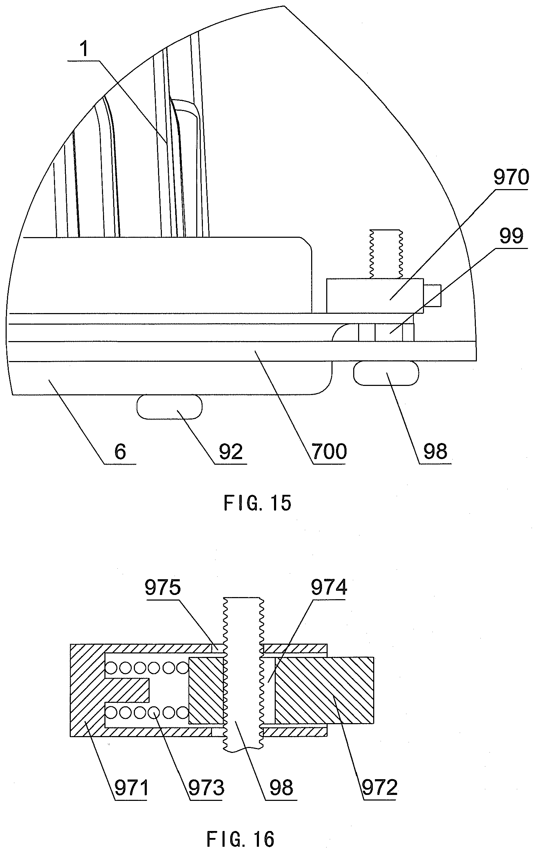

As shown in Fig. 4, Fig. 15∼20, this embodiment of LED road lamp improved from traditional road lamp is different from embodiment I as: this embodiment had removed decorate circle 6; also, the LED photo-electric source assembly 600 further comprises a wind scooper 10 with a flared shape; the wind scooper 10 is fixedly connected to the radiator 1 by several connecting bolts 98 across the top edge of the wind scooper 10, which surrounding the side of the radiating part 12; an annular air outlet 61 between bottom of the wind scooper 10 with bottom of the radiator 1 is provided; the outside air flow into the radiating fan 2 from the space between the lower cover 32 with the radiator 1, and flow outside through the annular air outlet 61 after through the channel inside of the radiating part 12; the bottom of the wind scooper 10 arragend outer edge, which holding down the installing board 700 and fixedly connected by bolts, adapts in size to the gap on installing board 700; the air inside the housing assembly 100 flow outside through the annular air outlet 61 by the radiator fan 2; also, two radiator parts which are made of several ventilation slots 703 in the installing board 700 are provided; it is good for inner air and outside air of the housing assembly 100 circulation and cooling.

And also, this embodiment of installing board of LED photo-electric source assembly is different from embodiment I as: in this embodiment, our installing holes 702 is on the installing board 700 arround the light outlet 701; an install bolts 98 is fixedly connected to the installing board 700 by going through the installing holes 702 by a nut 99, afterwards the installing hole 602 in the around of the wind scooper 10 is sleeved to the install bolt 98, and a snap joint 970 is fixedly connected to install bolts 98, the LED photo-electric source assembly 600 is fixedly connected to the installing board 700; wherein the snap joint 970 comprises a notched subject 971, a slider 972, a reset spring 973, the subject 971 and the slider 972 each arranged an axle hole 975, 974 for member bar pass through; the diameter of the install bolts 98 is smaller than the diameter of the axle holes 975, 974; reling on elastin of the reset spring 973, the holes 975, 974 is to close the screw part of the install bolts 98 by relative each other, and fixes joint with the install bolts 98 by side force; the speed for this snap connecting method is so fast.

The air inside of the housing assembly 100 of LED road lamp will be flow outside from the annular air outlet 61 through the radiator 2; so it will be make inner and outer air on outer casing circularly, and avoid high temperature by inner circular on outer casing, so it no needs to install extra outer exhaust fan, not affecting the lamp's appearance, but improving the product's stabilization; further, the annular air outlet 61 between the bottom of wind scooper 10 and radiator 1 enhances more decoration; so this invention of LED road lamp has easy structure, good heat dissipation, low inner working temperature, and no more extra cost.

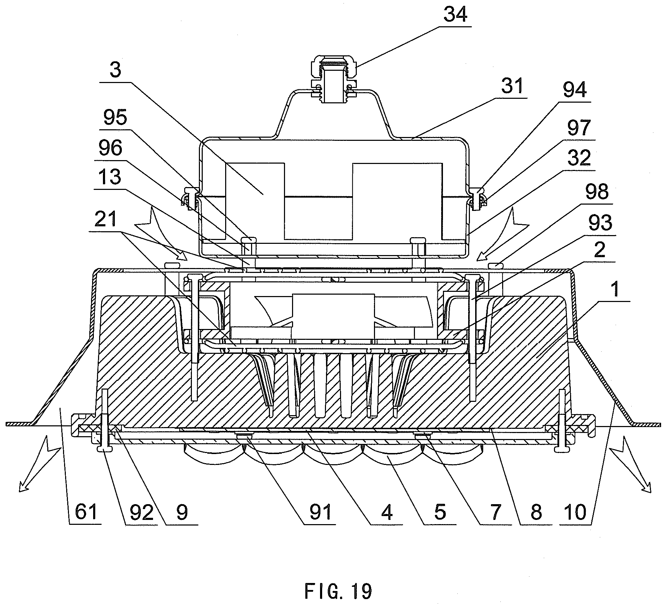

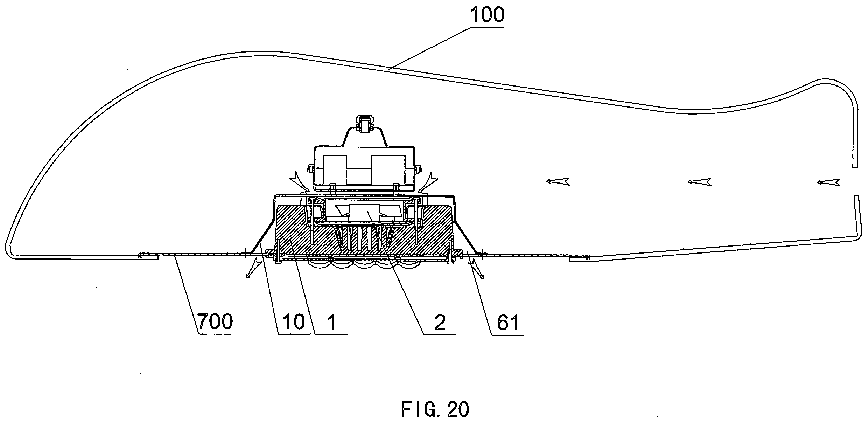

The air through into the radiating fan 2 will be deflect by the wind scooper 10 and make it fully flow by top in and bottom out, the flow path as shown in Fig 19 and 20, so this will be make heat air can fully flow when it through the radiator 1, and avoid blind area and turbulence, also avoid the abuse by cooling air can not disperse with high temperature on internal recycling; so it takes the cooling air flow to outside quickly and reduce lamp's working temperature; also the whole LED photo-electric source assembly is waterproof and dustproof, it can be apply for outside and dusty workshop, factory as basic component for road lamp, ceiling lamp, down lamp and bulkhead lamp etc.

Other characters in this embodiment is same as Embodiment I.

### Embodiment III:

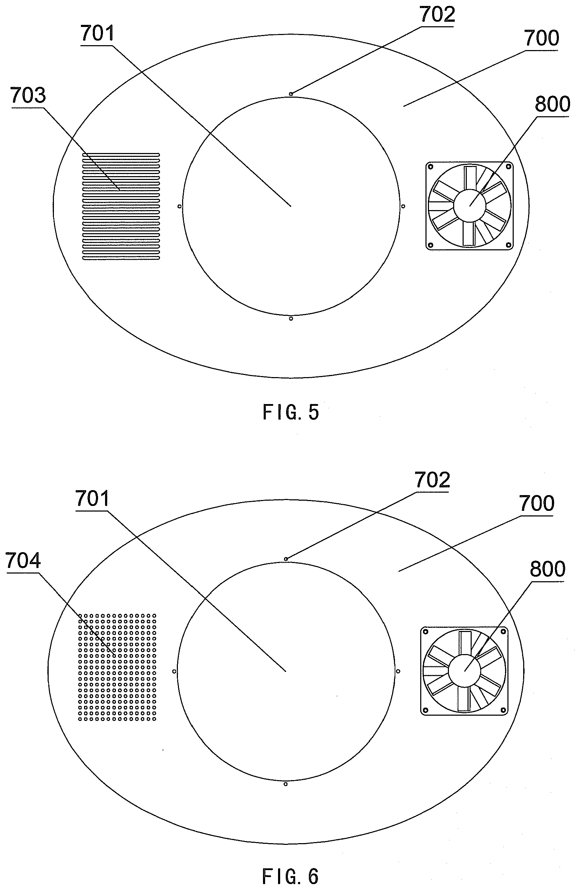

As shown in Fig. 5, this embodiment of the LED road lamp improved from traditional road lamp is different from embodiment I as: several ventilation slots 703 as a heat part in the installing board 700 are provided. Further, a install hole for fan is in the installing board 700, and an outer radiating fan 800 is on the install hole. It is good for inner air and outside air of the housing assembly 100 circulation.

Other characters in this embodiment is same as Embodiment I.

### Embodiment IV:

As shown in Fig. 6, this embodiment of the LED road lamp improved from traditional road lamp is different from embodiment I as: several ventilation holes 704 as a heat part in the installing board 700 are provided. Further, a install hole for fan is in the installing board 700, and an outer radiating fan 800 is on the install hole. It is good for inner air and outside air of the housing assembly 100 circulation.

Other characters in this embodiment is same as Embodiment I.

This invention can be widely applied to the field of LED illumination.

## Claims

1. An LED photo-electric source assembly (600), comprising: a radiator (1), a radiating fan (2), a driving circuit board subassembly (3), an LED light source component (4), an upper cover (31) of a power supply box, a lower cover (32) of the power supply box, and a waterproof bolt component (34), wherein the LED light source component (4) comprises several LED chips and LED submount; the radiator (1) comprises a bottom plate (11) that the undersurface is flat, on the top face of which a radiating part (12) being flaky or cylindrical is provided; the LED submount is fixedly connected to the bottom plate (11) transmitting heat; in the central area of the upper part of radiating part (12), a space area is provided for containing the radiating fan (2) i.e. dust-proof and water-proof fan; in the air intake and air outlet of the radiating fan (2) two fan guards (21) are provided; on the top of the radiating fan (2) the lower cover (32) is fixedly connected to radiator (1); the upper cover (31) and the lower cover (32) are sealed joint and the driving circuit board subassembly (3) is inside; the waterproof bolt component (34) connects the port which a power wire going through the upper cover (31).

2. The LED photo-electric source assembly according to claim 1, wherein a thermal insulation synthetic mica sheet (8) is between the LED submount and the bottom plate (11), the edge of which is beyond 1∼ 10mm to the edge of the LED submount; the LED submount and the bottom plate (11) are fixed through several first bolts (91), an insulating colloidal particle (7) fixed to the first bolts (91) is electrical isolation between the LED submount with the bottom plate (11) and first bolts (91); the LED photo-electric source assembly further comprising an annular insulator board (30), which is in the sealed space by the upper cover (31) and the lower cover (32), inside of which the driving circuit board subassembly (3) is provided.

3. The LED photo-electric source assembly according to claim 1, wherein several third bolts (93) are fixedly connected to radiator (1) orderly going through the upward fan guard (21) of the radiating fan (2), the radiating fan (2) and the downward fan guard (21) of which; the upper cover (31) and the lower cover (32) are fixedly connected by the fourth bolts (94) and several nuts (97); at least two shores (13) protruding out of the radiator part on the back of the radiator (1) are provided, and the shores (13) supporting the lower cover (32) are higher 10∼50mm than the top surface of the radiating fan (2); several double-screw bolts (96) with internal thread on head and external thread on tail are fixedly connected to the shores (13) going through the lower cover (32); several fifth bolts (95) are fixedly connected with the internal thread of the double-screw bolts (96) going through the driving circuit board subassembly (3); the height of the head of the double-screw bolts (96) which the internal thread inside is 5∼10mm; the outline of the radiator (1) is circular, and the upper cover (31) and the lower cover (32) are also circular.

4. The LED photo-electric source assembly according to of claim 1 to 3, further comprising a lens (5), a decorate circle (6); wherein the lens (5) and the decorate circle (6) are fixedly connected to the bottom of the radiator (1); a silicone waterproof gasket (9) is in the connector of the lens (5) with the bottom of the radiator (1), that is fixedly connected to the second bolts (92); sevaral installing holes (601) surrounding the decorate circle (6) are provided.

5. The LED photo-electric source assembly according to anyone of claim 1 to 3, further comprising a wind scooper (10) with flared shape; the wind scooper (10) is fixedly connected to the radiator (1) by several connecting bolts (98) across the top edge of the wind scooper (10), which surrounding the side of the radiating part (12); an annular air outlet (61) between bottom of the wind scooper (10) with bottom of the radiator (1) is provided; the outside air flow into the radiating fan (2) from the space between the lower cover (32) with the radiator (1), and flow outside through the annular air outlet (61) after through the channel inside of the radiating part (12).

6. The LED photo-electric source assembly according to claim 5, further comprising a lens (5), which is fixedly connected to bottom of the radiator (1) by the second bolts (92) and the silicone waterproof gasket (9); Sevaral installing holes (602) are in the around of the wind scooper (10).

7. An LED road lamp improved from traditional road lamp, comprising an LED photo-electric source assembly (600) according to anyone of claim 1 to 6, an installing board (700), and a housing assembly (100) of a traditional road lamp for containing light source, wherein a light outlet (701) arranged on the installing board (700) adapts in size and shape to an opening arranged at the bottom of the housing assembly (100); the LED photo-electric source assembly (600) is fixedly connected to the installing board (700) and emits light through the light outlet (701) and the installing board (700) is fixedly connected with the housing assembly (100) through a clamping fixture.

8. The LED road lamp improved from traditional road lamp according to claim 7, wherein several installing holes (702) are on the installing board (700) arround the light outlet (701); an install bolt (98) is fixedly connected to the installing board (700) by going through the installing holes (702) by a nut (99), afterwards the installing hole (601) of the LED photo-electric source assembly (600) is sleeved to the install bolt (98), and another nut (99) or a snap joint (970) is fixedly connected to install bolts (98), the LED photo-electric source assembly (600) is fixedly connected to the installing board (700).

9. The LED road lamp improved from traditional road lamp according to claim 7, wherein several ventilation slots (703) or ventilation holes (704) in the installing board (700) are provided.

10. The LED road lamp improved from traditional road lamp according to claim 7, wherein an install hole for a fan is in the installing board (700), and an outer radiating fan (800) is on the install hole.

11. The LED road lamp improved from traditional road lamp according to anyone of claim 7 to 10, wherein the clamping fixture comprises a roll forming plate (102) and several fastening screws (103); several install columns (101) with thread are arranged around the opening at the bottom of the housing assembly (100), on which the edge of the installing board (700) overlaping joint; a waterproof jacket (104) is arranged around the edge of installing board (700), and the bottom of the roll forming plate (102) is holding down the installing board (700), and the top of the roll forming plate (102) is fixedly connected to the install column (101) by the fastening screw (103), the installing board (700) is fixedly connected to the housing assembly (100).

12. The LED road lamp improved from traditional road lamp according to anyone of claim 7 to 10, wherein the LED photo-electric source assembly (600) further comprising a wind scooper (10) with a flared shape; the wind scooper (10) is fixedly connected to the radiator (1) by several connecting bolts (98) across the top edge of the wind scooper (10), which surrounding the side of the radiating part (12); an annular air outlet (61) between bottom of the wind scooper (10) with bottom of the radiator (1) is provided; the outside air flow into the radiating fan (2) from the space between the lower cover (32) with the radiator (1), and flow outside through the annular air outlet (61) after through the channel inside of the radiating part (12); the bottom of the wind scooper (10) arragend outer edge, which holding down the installing board (700) and fixedly connected by bolts, adapts in size to the gap on installing board (700); the air inside the housing assembly (100) flow outside through the annular air outlet (61) by the radiator fan (2).

## Patentansprüche

1. LED-photoelektrische-Quellenanordnung (600) mit einem Radiator (1), einem Kühlventilator (2), einer Antriebsleiterplattenunteranordnung (3), einer LED-Lichtquellenkomponente (4), einer oberen Abdeckung (31) einer Leistungsversorgungsbox, einer unteren Abdeckung (32) der Leistungsversorgungsbox und einer wasserdichten Bolzenkomponente (34), wobei die LED-Lichtquellenkomponente (4) mehrere LED-Chips und LED-Unterbefestiger aufweist, der Radiator (1) eine Bodenplatte (11) aufweist, dass die Unterseite flach ist, auf deren Oberseite ein kühlender Teil (12), der schuppig oder zylindrisch ist, vorgesehen ist, der LED-Unterbefestiger fest mit der Bodenplatte (11) zum Übertragen der Wärme verbunden ist, in dem zentralen Bereich des oberen Teils des kühlenden Teils (12) ein Raumbereich zum Enthalten des Kühlventilators (2), d.h. staubdichten und wasserdichten Ventilators, vorgesehen ist, in dem Lufteinlass und Luftauslass des Kühlventilators (2) zwei Ventilatorschutzgitter (21) vorgesehen sind, auf der Oberseite des Kühlventilators (2) die untere Abdeckung (32) fest mit dem Radiator (1) verbunden ist, die obere Abdeckung (31) und die untere Abdeckung (32) abgedichtet verbunden sind und die Antriebsleiterplattenanordnung (3) innerhalb ist, die wasserdichte Bolzenkomponente (34) den Anschluss mit einem Stromkabel verbindet, das durch die obere Abdeckung (31) geht.

2. LED-photoelektrische-Quellenanordnung nach Anspruch 1, wobei sich eine thermisch isolierende synthetische Glimmerschicht (8) zwischen dem LED-Unterbefestiger und der Bodenplatte (11) befindet, deren Kante 1∼10 mm über die Kante des LED-Unterbefestigers hinausgeht, der LED-Unterbefestiger und die Bodenplatte (11) fest durch einige erste Bolzen (91) verbunden sind, ein isolierendes kolloidales Partikel (7), das an dem ersten Bolzen (91) befestigt ist, eine elektrische Isolierung zwischen dem LED-Unterbefestiger mit der Bodenplatte (11) und den ersten Bolzen (91) ist, die LED-photoelektrische Quellenanordnung ferner eine ringförmige Isolierplatte (30) aufweist, welche sich in dem von der oberen Abdeckung (31) und der unteren Abdeckung (32) abgedichteten Raum befindet, in dem die Antriebsleiterplattenunteranordnung (3) vorgesehen ist.

3. LED-photoelektrische-Quellenanordnung nach Anspruch 1, wobei einige dritte Bolzen (93) fest mit dem Radiator (1) verbunden sind, die ordnungsgemäß durch das obere Ventilatorschutzgitter (21) des Kühlventilators (2), den Kühlventilator (2) und das untere Ventilatorschutzgitter (21) desselben gehen, die obere Abdeckung (31) und die untere Abdeckung (32) fest mittels der vierten Bolzen (94) und einigen Schraubenmuttern (97) verbunden sind, mindestens zwei Streben (13), die aus dem Radiatorteil auf der Rückseite des Radiators (1) hervortreten, vorgesehen sind, und die die untere Abdeckung (32) stützenden Streben (13) 10∼50 mm höher sind als die obere Fläche des Kühlventilators (2), einige Doppelschraubenbolzen (96) mit Innengewinden am Kopf und Außengewinden am Ende fest mit den Streben (13) verbunden sind, welche durch die untere Abdeckung (32) gehen, einige fünfte Bolzen (95) fest mit dem Innengewinde der Doppelschraubenbolzen (96) verbunden sind, welche durch die Antriebsleiterplattenboardunteranordnung (3) gehen, die Höhe des Kopfes der Doppelschraubenbolzen (96), in dem sich das Innengewinde befindet, 5∼10 mm ist, der Umriss des Radiators (1) kreisförmig ist und die obere Abdeckung (31) und die untere Abdeckung (32) ebenfalls kreisförmig sind.

4. LED-photoelektrische-Quellenanordnung nach einem der Ansprüche 1 bis 3, ferner mit einer Linse (5), einem dekorierenden Kreis (6), wobei die Linse (5) und der dekorierende Kreis (6) fest mit dem Boden des Radiators (1) verbunden sind, eine wasserdichte Silikondichtung (9) sich in dem Verbinder der Linse (5) mit dem Boden des Radiators (1) befindet, der fest mit den zweiten Bolzen (92) verbunden ist, einige Installierlöcher (601) vorgesehen sind, die den dekorierenden Kreis (6) umgeben.

5. LED-photoelektrische-Quellenanordnung nach einem der Ansprüche 1 bis 3, ferner mit einem Windfänger (10) mit aufgeweiteter Form, wobei der Windfänger (10) fest mit dem Radiator (1) mittels einiger Verbindungsbolzen (98) durch die obere Kante des Windfängers (10) verbunden ist, welcher die Seite des kühlenden Teils (12) umgibt, ein ringförmiger Luftauslass (61) zwischen dem Boden des Windfängers (10) und dem Boden des Radiators (1) vorgesehen ist, die Außenluft von dem Raum zwischen der unteren Abdeckung (32) und dem Radiator (1) in den Kühlventilator (2) strömt, nachdem sie durch den Kanal im Inneren des kühlenden Teils (12) geströmt ist, durch den ringförmigen Luftauslass (61) nach draußen.

6. LED-photoelektrische-Quellenanordnung nach Anspruch 5, ferner mit einer Linse (5), die fest mit dem Boden des Radiators (1) mittels der zweiten Bolzen (92) und der wasserdichten Silikondichtung (9) verbunden ist und einige Installierlöcher (602) sich in der Gegend des Windfängers (10) befinden.

7. LED-Straßenlampe, verbessert bezüglich herkömmlicher Straßenlampen, mit einer LED-photoelektrischen-Quellenanordnung (600) nach einem der Ansprüche 1 bis 6,
einem Installationsboard (700) und einer Gehäuseanordnung (100) einer herkömmlichen Straßenlampe zum Enthalten einer Lichtquelle, wobei ein Lichtauslass (701), der auf dem Installationsboard (700) angeordnet ist, sich in Größe und Form an die am Boden der Gehäuseanordnung (100) angeordnete Öffnung anpasst, die LED-photoelektrische-Quellenanordnung (600) fest mit dem Installationsboard (700) verbunden ist und Licht durch den Lichtauslass (701) emittiert und das Installationsboard (700) fest mit der Gehäuseanordnung (100) durch eine Klemmfixierung verbunden ist.

8. LED-Straßenlampe, verbessert bezüglich herkömmlicher Straßenlampen, nach Anspruch 7, wobei sich einige Installationslöcher (702) auf dem Installationsboard (700) um den Lichtauslass (701) befinden, ein Installationsbolzen (98) fest mit dem Installationsboard (700) verbunden ist, indem er durch die Installationslöcher (702) durch eine Schraubenmutter (99) geht, danach das Installationsloch (601) der LED-photoelektrischen-Quellenanordnung (600) an dem Installationsbolzen (98) geärmelt ist und eine weitere Gewindemutter (99) oder eine Schnappverbindung (79) fest mit den Installationsbolzen (98) verbunden ist und die LED-photoelektrische Quellenanordnung (600) fest mit dem Installationsboard (700) verbunden ist.

9. LED-Straßenlampe, verbessert bezüglich herkömmlicher Straßenlampen, gemäß Anspruch 7, wobei mehrere Ventilationsschlitze (703) oder Ventilationslöcher (704) in dem Installationsboard (700) vorgesehen sind.

10. LED-Straßenlampe, verbessert bezüglich herkömmlicher Straßenlampen, nach Anspruch 7, wobei sich ein Installationsloch für einen Ventilator in dem Installationsboard (700) befindet und sich
ein äußerer Kühlventilator (800) auf dem Installationsloch befindet.

11. LED-Straßenlampe, verbessert bezüglich herkömmlicher Straßenlampen, nach einem der Ansprüche 7 bis 10,
wobei die Klemmfixierung eine Rollformplatte (102) und einige Befestigungsschrauben (103) umfasst, einige Installationssäulen mit Gewinden um die Öffnung am Boden der Gehäuseanordnung (100) angeordnet sind, auf dem die Kante des Installationsboards (700) ein Gelenk überlappt, eine wasserdichte Hülle (104) um die Kante des Installationsboards (700) angeordnet ist und der Boden der Rollformplatte (102) das Installationsboard (700) unten hält, und die Oberseite der Rollformplatte (102) fest mit der Installationssäule (101) mittels der Befestigungsschrauben (103) verbunden ist und das Installationsboard (700) fest mit der Gehäuseanordnung (100) verbunden ist.

12. LED-Straßenlampe, verbessert bezüglich herkömmlicher Straßenlampen, nach einem der Ansprüche 7 bis 10,
wobei die LED-photoelektrische-Quellenanordnung (600) ferner aufweist einen Windfänger (10) mit einer aufgeweiteten Form, der Windfänger (10) fest mit dem Radiator (1) mittels einiger Verbindungsbolzen (98) durch die obere Kante des Windfängers (10) verbunden ist, die die Seite des Kühlenden Teils (12) umgibt, einen ringförmigen Luftauslass (61) zwischen dem Boden des Windfängers (10) und dem Boden des Radiators (1) vorgesehen ist, die Außenluft von dem Raum zwischen der unteren Abdeckung (32) und dem Radiator (1) in den Kühlventilator (2) strömt und durch den ringförmigen Luftauslass (61) nach außen strömt, nachdem sie durch den Kanal im Inneren des kühlenden Teils (12) geströmt ist, der Boden des Windfängers (10) an der äußeren Kante vorgesehen ist, die das Installationsboard (700) unten hält und fest mittels Bolzen verbunden ist, sich in der Größe an den Spalt auf dem Installationsboard (700) anpasst und die Luft in der Gehäuseanordnung (100) durch den ringförmigen Luftauslass (61) durch den Kühlventilator (2) nach außen strömt.

## Revendications

1. Ensemble source photoélectrique à DEL (600), comprenant : un radiateur (1), un ventilateur de rayonnement (2), un sous-ensemble de carte de circuit d'entraînement (3), un composant de source de lumière à DEL (4), un couvercle supérieur (31) d'un boîtier d'alimentation, un couvercle inférieur (32) du boîtier d'alimentation, et un composant de boulon imperméable (34), dans lequel le composant de source de lumière à DEL (4) comprend plusieurs puces de DEL et une sous-monture de DEL ; le radiateur (1) comprend une plaque inférieure (11) dont la sous-surface est plate, sur la face supérieure de laquelle une partie de rayonnement (12) lamellée ou cylindrique est disposée ; la sous-monture de DEL est reliée à demeure à la plaque inférieure (11) transmettant de la chaleur ; dans la zone centrale de la partie supérieure de la partie de rayonnement (12), une zone d'espace est prévue pour contenir le ventilateur de rayonnement (2), c'est-à-dire un ventilateur anti-poussière et imperméable ; dans l'admission d'air et la sortie d'air du ventilateur de rayonnement (2), deux protèges-ventilateur (21) sont prévus ; sur le ventilateur de rayonnement (2), le couvercle inférieur (32) est relié à demeure au radiateur (1) ; le couvercle supérieur (31) et le couvercle inférieur (32) sont joints de façon étanche et le sous-ensemble de carte de circuit d'entraînement (3) est à l'intérieur ; le composant de boulon imperméable (34) relie l'orifice par lequel un fil d'alimentation traverse le couvercle supérieur (31).

2. Ensemble source photoélectrique à DEL selon la revendication 1, dans lequel une feuille de mica synthétique d'isolation thermique (8) se trouve entre la sous-monture de DEL et la plaque inférieure (11), dont le bord se trouve au-delà de 1∼10 mm jusqu'au bord de la sous-monture de DEL ; la sous-monture de DEL et la plaque inférieure (11) sont fixées par le biais de plusieurs premiers boulons (91), une particule colloïdale d'isolation (7) fixée aux premiers boulons (91) est en isolation électrique entre la sous-monture de DEL avec la plaque inférieure (11) et les premiers boulons (91) ; l'ensemble source photoélectrique à DEL comprenant en outre une carte d'isolation annulaire (30), qui se trouve dans l'espace étanche par le couvercle supérieur (31) et le couvercle inférieur (32), à l'intérieur duquel le sous-ensemble de carte de circuit d'entraînement (3) se trouve.

3. Ensemble source photoélectrique à DEL selon la revendication 1, dans lequel plusieurs troisièmes boulons (93) sont reliés à demeure au radiateur (1) traversant dans l'ordre le protège-ventilateur amont (21) du ventilateur de rayonnement (2), le ventilateur de rayonnement (2) et le protège-ventilateur aval (21) de celui-ci ; le couvercle supérieur (31) et le couvercle inférieur (32) sont reliés à demeure par les quatrièmes boulons (94) et plusieurs écrous (97) ; au moins deux étais (13) faisant saillie à l'extérieur de la partie de rayonnement sur l'arrière du radiateur (1) sont prévus, et les étais (13) supportant le couvercle inférieur (32) sont de 10∼50 mm plus hauts que la surface supérieure du ventilateur de rayonnement (2) ; plusieurs boulons à double-vis (96) ayant un filetage interne sur la tête et un filetage externe sur la queue sont reliés à demeure aux étais (13) traversant le couvercle inférieur (32) ; plusieurs cinquièmes boulons (95) sont reliés à demeure au filetage interne des boulons à double-vis (96) traversant le sous-ensemble de carte de circuit d'entraînement (3) ; la hauteur de la tête des boulons à double-vis (96) qui renferme le filetage interne est de 5∼10 mm ; le contour du radiateur (1) est circulaire, et le couvercle supérieur (31) et le couvercle inférieur (32) sont également circulaires.

4. Ensemble source photoélectrique à DEL selon l'une des revendications 1 à 3, comprenant en outre une lentille (5), un cercle décoratif (6) ; dans lequel la lentille (5) et le cercle décoratif (6) sont reliés à demeure à la partie inférieure du radiateur (1) ; un joint imperméable en silicone (9) est dans le raccord de la lentille (5) avec la partie inférieure du radiateur (1), qui est relié à demeure aux deuxièmes boulons (92) ; plusieurs trous d'installation (601) entourant le cercle décoratif (6) sont prévus.

5. Ensemble source photoélectrique à DEL selon l'une quelconque des revendications 1 à 3, comprenant en outre une manche à air (10) de forme évasée ; la manche à air (10) est reliée à demeure au radiateur (1) par plusieurs boulons de liaison (98) à travers le bord supérieur de la manche à air (10), entourant le côté de la partie de rayonnement (12) ; une sortie d'air annulaire (61) entre la partie inférieure de la manche à air (10) et la partie inférieure du radiateur (1) est prévue ; l'air extérieur s'écoule dans le ventilateur de rayonnement (2) depuis l'espace entre le couvercle inférieur (32) et le radiateur (1), et s'écoule à l'extérieur par la sortie d'air annulaire (61) à travers le canal à l'intérieur de la partie de rayonnement (12).

6. Ensemble source photoélectrique à DEL selon la revendication 5, comprenant en outre une lentille (5), qui est reliée à demeure à la partie inférieure du radiateur (1) par les deuxièmes boulons (92) et le joint imperméable en silicone (9) ; plusieurs trous d'installation (602) se trouvent dans les environs de la manche à air (10).

7. Lampe de chaussée à DEL améliorée par rapport à une lampe de chaussée classique, comprenant un ensemble de source photo-électrique à DEL (600) selon l'une quelconque des revendications 1 à 6, une carte d'installation (700), et un ensemble logement (100) d'une lampe de chaussée classique pour contenir une source de lumière, dans laquelle une sortie de lumière (701) agencée sur la carte d'installation (700) s'adapte en taille et en forme à une ouverture agencée au niveau de la partie inférieure de l'ensemble logement (100) ; l'ensemble source photo-électrique à DEL (600) est reliée à demeure à la carte d'installation (700) et émet de la lumière par la sortie de lumière (701) et la carte d'installation (700) est reliée à demeure à l'ensemble logement (100) par l'intermédiaire d'un accessoire de serrage.

8. Lampe de chaussée à DEL améliorée par rapport à une lampe de chaussée classique selon la revendication 7, dans laquelle plusieurs trous d'installation (702) se situent sur la carte d'installation (700) autour de la sortie de lumière (701) ; un boulon d'installation (98) est relié à demeure à la carte d'installation (700) en traversant les trous d'installation (702) par un écrou (99), après quoi le trou d'installation (601) de l'ensemble de source photoélectrique à DEL (600) est manchonné sur le boulon d'installation (98), et un autre écrou (99) ou un raccord par encliquetage (970) est relié à demeure aux boulons d'installation (98), l'ensemble de source photo-électrique à DEL (600) est relié à demeure à la carte d'installation (700).

9. Lampe de chaussée à DEL améliorée par rapport à une lampe de chaussée classique selon la revendication 7, dans laquelle plusieurs trous de ventilation (703) ou trous de ventilation (704) dans la carte d'installation (700) sont prévus.

10. Lampe de chaussée à DEL améliorée par rapport à une lampe de chaussée classique selon la revendication 7, dans laquelle un trou d'installation pour un ventilateur se trouve dans la carte d'installation (700), et un ventilateur de rayonnement extérieur (800) se trouve sur le trou d'installation.

11. Lampe de chaussée à DEL améliorée par rapport à une lampe de chaussée classique selon l'une quelconque des revendications 7 à 10, dans laquelle l'accessoire de serrage comprend une plaque de formation de rouleau (102) et plusieurs vis de fixation (103) ; plusieurs colonnes d'installation (101) avec filetage sont agencées autour de l'ouverture au niveau de la partie inférieure de l'ensemble logement (100), sur lequel le bord de la carte d'installation (700) chevauche le raccord ; une chemise imperméable (104) est agencée autour du bord de la carte d'installation (700), et la partie inférieure de la plaque de formation de rouleau (102) maintient en bas la carte d'installation (700), et la partie supérieure de la plaque de formation de rouleau (102) est reliée à demeure à la colonne d'installation (101) par la vis de fixation (103), la carte d'installation (700) est reliée à demeure à l'ensemble logement (100).

12. Lampe de chaussée à DEL améliorée par rapport à une lampe de chaussée classique selon l'une quelconque des revendications 7 à 10, dans laquelle l'ensemble de source photo-électrique à DEL (600) comprenant en outre une manche à air (10) ayant une forme évasée ; la manche à air (10) est reliée à demeure au radiateur (1) par plusieurs boulons de liaison (98) à travers le bord supérieur de la manche à air (10), entourant le côté de la partie de rayonnement (12) ; une sortie d'air annulaire (61) entre la partie inférieure de la manche à air (10) et la partie inférieure du radiateur (1) est prévue ; l'air extérieur s'écoule dans le ventilateur de rayonnement (2) depuis l'espace entre le couvercle inférieur (32) et le radiateur (1), et s'écoule à l'extérieur par la sortie d'air annulaire (61) à le canal à l'intérieur de la partie de rayonnement (12) ; la partie inférieure de la manche à air (10) agencée autour du bord extérieur, maintenant en bas la carte d'installation (700) reliée à demeure par des boulons, s'adapte en taille à l'espace sur la carte d'installation (700) ; l'air à l'intérieur de l'ensemble logement (100) s'écoule à l'extérieur par la sortie d'air annulaire (61) par le ventilateur de rayonnement (2).
